Europäisches Patentamt

European Patent Office

Office européen des brevets

(19)

(11) EP 0 568 690 B1

(12) FASCICULE DE BREVET EUROPEEN

(45) Date de publication et mention
de la délivrance du brevet:
**31.07.1996 Bulletin 1996/31**

(21) Numéro de dépôt: **93900264.8**

(22) Date de dépôt: **20.11.1992**

(51) Int Cl.⁶: **G03B 21/56**, G02F 1/1333,
G02F 1/1335

(86) Numéro de dépôt international:
**PCT/FR92/01078**

(87) Numéro de publication internationale:
**WO 93/10481 (27.05.1993 Gazette 1993/13)**

(54) **ECRAN POUR PROJECTION D'IMAGE**

PROJEKTIONSSCHIRM FUER BILDER

SCREEN FOR IMAGE PROJECTION

(84) Etats contractants désignés:
**DE ES GB NL**

(30) Priorité: **22.11.1991 FR 9114403**

(43) Date de publication de la demande:
**10.11.1993 Bulletin 1993/45**

(73) Titulaire: **THOMSON-CSF
75008 Paris (FR)**

(72) Inventeurs:
• **LOISEAUX, Brigitte
F-92402 Courbevoie Cédex (FR)**
• **ROBIN, Philippe
F-92402 Courbevoie Cédex (FR)**
• **OPPENLANDER, Andréas
F-92402 Courbevoie Cédex (FR)**
• **HUIGNARD, Jean-Pierre
F-92402 Courbevoie Cédex (FR)**

(74) Mandataire: **Guérin, Michel et al
THOMSON-CSF
SCPI
B.P. 329
50, rue Jean-Pierre Timbaud
F-92402 Courbevoie Cédex (FR)**

(56) Documents cités:
**FR-A- 2 549 627**

• **PATENT ABSTRACTS OF JAPAN vol. 14, no. 343
(P-1082) 25 juillet 1990 ; & JP-A-02 120 828**
• **PATENT ABSTRACTS OF JAPAN vol. 10, no. 9
(P-420) 14 janvier 1986 ; & JP-A-60 165 632**
• **PATENT ABSTRACTS OF JAPAN vol. 13, no. 57
(P-825) 9 février 1989 ; & JP-A-63 247 721**
• **PATENT ABSTRACTS OF JAPAN vol. 11, no. 383
(P-646) 15 décembre 1987 ; & JP-A-62 150 324**
• **PATENT ABSTRACTS OF JAPAN vol. 9, no. 54
(P-340) 8 mars 1985 ; & JP-A-59 191 017**

# Description

L'invention concerne un écran diffusant et plus particulièrement un écran pour projection d'image utilisable notamment dans le domaine de la télévision haute définition.

En effet dans ce domaine on cherche actuellement à obtenir des images dont les dimensions sont de l'ordre du mètre carré, une telle contrainte peut être satisfaite en ayant recours à des dispositifs de projection comprenant des tubes cathodiques ou des matrices à cristal liquide dans lesquels l'observateur et les images sont du même côté de l'écran.

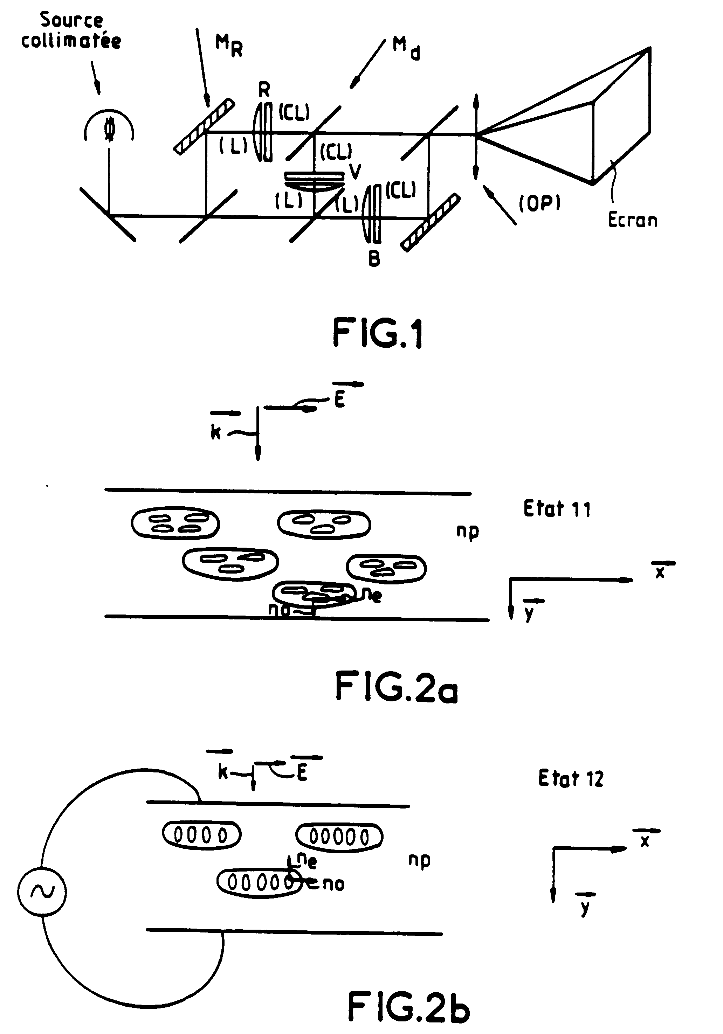

La figure 1 illustre un exemple de réalisation de ce type de projecteur d'images dans lequel l'écran constitue un élément indépendant du projecteur, qui permet de visualiser une image dont la taille peut être variable. Il se compose d'une source lumineuse collimatée, de miroirs de renvoi $M_R$ et de miroirs dichroïques Md capables de réfléchir sélectivement le rouge, le vert et le bleu ainsi que des lentilles L couplées à des matrices cristal liquide CL permettant de moduler les intensités lumineuses rouge, verte ou bleue. Les faisceaux lumineux de couleur sont recombinés puis envoyés sur un objectif de projection OP capable de projeter sur un écran l'image ainsi constituée, l'observateur étant situé entre le projecteur et l'écran et recevant les images en réflexion depuis l'écran. L'écran n'étant pas intégré au projecteur, il est donc nécessaire que l'utilisateur s'équipe d'un projecteur et d'un écran indépendant. Mais l'emploi d'un écran nécessite soit de le ranger et de le sortir uniquement lorsque l'on en a l'usage soit de disposer d'un espace disponible et suffisant pour conserver son écran en permanence en mode de fonctionnement. Pour pallier ce problème l'invention propose un dispositif permettant l'utilisation d'une surface quelconque transparente ou non (fenêtre ou mur) comme écran diffusant.

Pour cela l'invention utilise une structure décrite dans le Brevet JP-A-0 212 0828 comprenant une couche à base de cristal liquide et une couche à base de matériau électrochrome.

Plus précisément, on dispose sur la surface quelconque un écran selon l'invention capable d'être transparent hors mode de fonctionnement (laissant passer la lumière dans le cas d'une fenêtre ou le décor mural dans le cas d'un mur) et de devenir réfléchissant (avantageux par rapport aux écrans diffusant classiques) et diffusant tels les écrans classiques, en mode de fonctionnement. Lorsque ce type d'écran selon l'invention est apposé sur une fenêtre, il peut avantageusement servir de volet permettant d'isoler un sujet de l'extérieur sans pour autant apporter une zone sombre puisque la lumière ambiante peut se rétrodiffuser sur la fenêtre devenue diffusante. L'invention propose ainsi un écran diffusant comprenant une cellule C1 à base de cristal liquide superposée à une cellule $C_2$ à base de matériau électrochrome $E_c$ disposée sur la surface d'un support, caractérisé en ce que :

- la cellule $C_1$ comprend un film de polymère d'indice optique $n_p$ dans lequel sont dispersées des microbilles allongées parallèlement au plan du film, ces microbilles contenant des molécules cristal liquide oblongues et biréfringentes d'indice extraordinaire $n_e$ tel que $n_e$ est égal à $n_p$, de manière à assurer un état au repos transparent et un état excité diffusant.

Le matériau de la cellule $C_1$ peut être un polymère P dans lequel est dispersé un cristal liquide. Comme l'illustrent les figure 2a (état transparent) et figure 2b (état diffusant) il est possible avec ce type de matériau d'obtenir les deux états souhaités. En effet, il est possible de fabriquer des films de polymère dans lesquels sont dispersées des billes de cristal liquide. La figure 2a illustre un film de polymère à cristal liquide dispersé (PDLC) au repos. Les billes dispersées dans le polymère peuvent renfermer des particules de cristal liquide, on choisit préférentiellement un nématique présentant des particules oblongues s'orientant parallèlement à un axe privilégié (schématisé sur la figure 2a par la direction x). L'ellipsoïde des indices de telles molécules ne présente pas de symétrie de révolution et l'on définit classiquement deux indices optiques, l'indice optique ordinaire $n_o$ dans une direction perpendiculaire au grand axe de la molécule et l'indice extraordinaire $n_e$ dans une direction parallèle. La fabrication des films génère classiquement des microbilles allongées parallèlement au plan du film dans lesquelles les molécules nématiques sont contraintes à s'orienter parallèlement au grand axe de ces microbilles. Ainsi lorsqu'un rayon lumineux arrive sous une incidence de direction k perpendiculaire au plan du film (PDLC), il est influencé par l'indice optique extraordinaire $n_e$ (correspondant à l'axe optique parallèle à la direction x) ; cet indice peut avoir été judicieusement choisi égal à l'indice optique du polymère liant $n_p$ et donc à l'état 11, le milieu apparaît homogène et peut donc être transparent à la lumière incidente. La figure 2b illustre le comportement des molécules nématiques lorsque le film est soumis à un champ électrique de préférence alternatif appliqué dans une direction y perpendiculaire au plan du film. Les molécules nématiques sont contraintes et s'orientent selon cette direction y, l'indice optique déterminant est dans ce cas l'indice ordinaire $n_o$ différent de l'indice optique moyen du polymère $n_p$, il y a ainsi des petits domaines d'indice optique différent créant des défauts générant des zones inhomogènes dans le film et conduisant à l'existence d'un état 12 diffusant et rétrodiffusant (la diffusion s'effectuant dans le sens de propagation de la lumière et la rétrodiffusion s'effectuant dans la direction opposée).

De préférence le matériau de la cellule $C_2$ est un matériau électrochrome dont l'absorption peut être commandée électriquement et qui est ainsi capable de passer d'un état transparent 21 à un état partiellement absorbant et partiellement réfléchissant 22. Lorsque le matériau de la cellule $C_1$ est dans son état diffusant 12, il est intéressant d'intercaler entre ce matériau et la surface le matériau de la cellule $C_2$ dans son état 22 de manière à compenser la transmission partielle de la cellule $C_1$ qui bien que diffusante et rétrodiffusante, transmet toujours un peu de lumière issue de l'extérieur dans le cas d'une fenêtre ou d'éléments muraux dans le cas d'un mur. Cette lumière parasite vient perturber l'écran diffusant et le contraste des images vues par un observateur lorsque l'écran est utilisé dans un dispositif de projection d'images. L'intérêt de la cellule $C_2$ est double puisque le matériau de cette cellule dans son état 22 est aussi partiellement réfléchissant et peut ainsi générer la rétrodiffusion de la lumière transmise par la cellule $C_1$ augmentant par conséquent la rétrodiffusion totale et donc la luminosité de l'écran.

Les deux cellules $C_1$ et $C_2$ utilisées dans l'invention comprennent de préférence des électrodes transparentes permettant d'appliquer les tensions nécessaires aux différents changements d'état.

L'écran selon l'invention peut être utilisé comme écran pour projection d'images lorsqu'il est associé à un dispositif de projection d'images comprenant une source de lumière fournie par un tube cathodique ou un ensemble de matrices à cristal éclairées par une lampe.

L'invention sera mieux comprise et d'autres avantages apparaîtront à la lecture de la description donnée à titre non limitatif et des figures annexées parmi lesquelles :

- la figure 1 illustre un exemple de dispositif de projection d'image associé à un écran de projection selon l'art connu ;
- la figure 2 schématise le fonctionnement d'un film de polymère contenant du cristal liquide dispersé :

  . la figure 2a montre ce type de film générant un état transparent 11
  . la figure 2b montre le même film générant un état diffusant 12 sous champ électrique

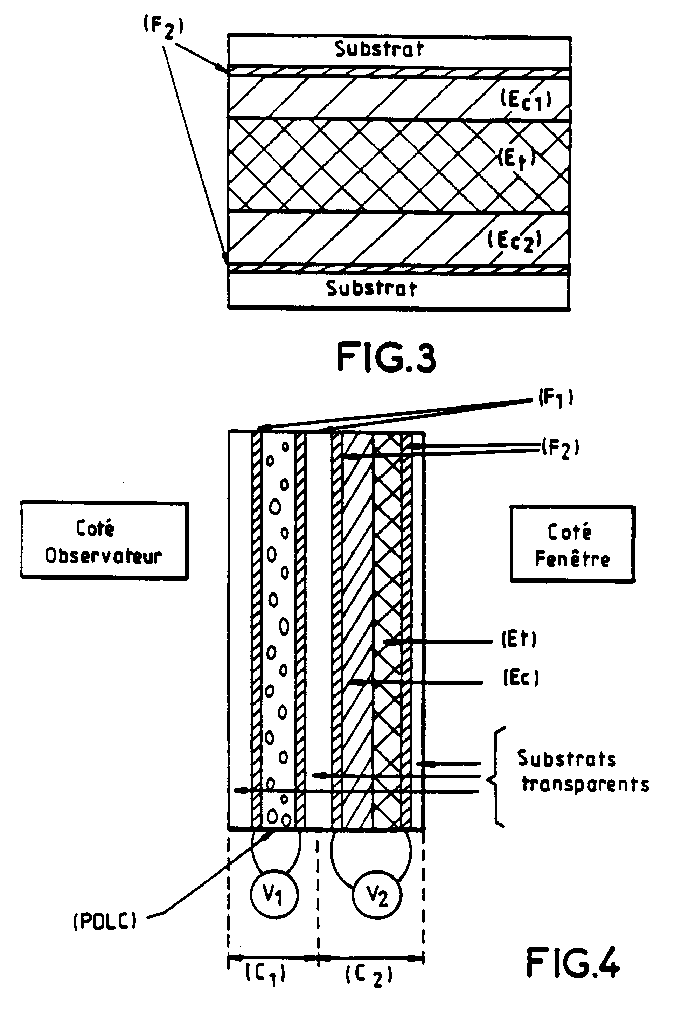

- la figure 3 illustre un exemple de cellule $C_2$ utilisée dans un écran diffusant selon l'invention ;
- la figure 4 illustre un exemple d'écran diffusant selon l'invention constitué par l'association d'une cellule $C_1$ comprenant un polymère à cristal liquide dispersé et d'une cellule $C_2$ comprenant un matériau électrochrome.

L'écran diffusant selon l'invention peut avantageusement être constitué d'une cellule $C_1$ comprenant un matériau polymère pouvant être de type polyvinylalcool ou de type résine époxy dans lequel sont dispersées des billes de cristal liquide de préférence nématique. Plusieurs techniques permettent l'obtention de films composites de cette nature. La synthèse du polymère PDLC peut être effectuée en réalisant un latex de particules cristal liquide encapsulées par une couronne de polymère, l'enduction d'un substrat par ce type de solution suivie de l'évaporation du solvant, génère un film de polymère à cristal liquide dispersé. Il est également possible d'utiliser un cristal liquide à l'état fluide, un monomère liquide, de mélanger l'ensemble, de déposer ce mélange sur un substrat puis d'initier la polymérisation thermiquement ou par rayonnement ultra violets, le polymère et le cristal liquide démixant et conduisant à l'obtention du film de PDLC. Il est également possible de mélanger à chaud directement un polymère à l'état solide à un cristal liquide, de réaliser à chaud l'enduction d'un substrat puis de provoquer la démixtion du polymère et du cristal liquide en refroidissant. Une autre possibilité consiste à trouver un solvant commun au cristal liquide et au polymère, de réaliser l'enduction d'un substrat à partir de cette solution, l'évaporation ultérieure du solvant conduisant alors à la séparation de phase et à la formation du film de PDLC. Des études ont montré que le contrôle des lobes de diffusion et de rétrodiffusion est assuré par la répartition en taille des billes de cristal liquide et l'épaisseur du film (S. Zumer, J.W. Doane Phys. Rev. A. <u>34</u>, 4, 1986 p. 3373). Typiquement la taille des billes peut être de l'ordre de quelques microns pour un film de polymère de quelques dizaines de microns.

Pour réaliser une cellule $C_1$ commandable électriquement le film de matériau de cette couche est placé entre deux électrodes transparentes pouvant être des plaques de verre recouvertes d'oxyde d'indium et d'étain.

La cellule $C_1$ est associée à une cellule $C_2$ comprenant un matériau capable de passer d'un état transparent 21 à un état absorbant et réfléchissant 22. Lorsque ce matériau employé est un électrochrome $E_c$ il est nécessaire de le coupler à un matériau électrolyte Et. En effet un matériau électrochrome peut devenir plus absorbant par insertion de cations tels les oxydes $WO_3$, $V_2O_5$ ou $Nb_2O_5$ ou bien encore $TiO_2$. Il peut également se colorer par insertion d'anions tel l'oxyde $IrO_2$ ou bien encore se colorer par désinsertion d'ions tel l'oxyde de nickel protoné $NiO_2$, H+. Dans tous les cas l'échange d'ions est assuré par la présence d'une couche de matériau électrolyte en contact avec la couche de matériau électrochrome. L'électrolyte employé peut être un complexe organique formé de polymères de type polyéthers et de sels de métaux alcalins. La cellule $C_2$ peut ainsi être composée de deux plaques de verre (ou tout autre substrat transparent tels que des films souples de polymères) sur lesquels sont déposées des électrodes transparentes $F_2$ pouvant être des couches d'oxyde d'Indium et d'Etain. Entre ces électrodes sont insérées au moins une couche de matériau électrochrome $E_c$ et une couche de l'électrolyte Et.

La figure 3 illustre un exemple de réalisation de cellule $C_2$ comportant deux couches de matériaux électrochromes $Ec_1$ et $Ec_2$ séparées par une couche d'électrolyte Et. Le matériau $Ec_1$ peut être un électrochrome capable de se colorer par insertion réversible de cations, le matériau $Ec_2$ peut être un électrochrome capable de se colorer et donc d'absorber par insertion d'anions et l'électrolyte est alors dans ce cas en mesure de fournir des cations et des anions sous l'action d'une tension. Plus précisément, il peut s'agir de l'association d'une couche d'oxyde de Tungstène $WO_3$ (matériau $Ec_1$) ; l'électrolyte Et pouvant être du carbonate de propylène chargé en perchlorate de lithium (ions Li+ et $ClO_4$-). L'intérêt de deux couches est double et réside dans le fait d'isoler la couche réactive d'électrolyte Et d'une électrode $F_2$ de manière à en éviter la dégradation, et de renforcer les variations d'absorption de la cellule électrochrome $C_2$.

L'association d'une cellule $C_1$ avec une cellule $C_2$ est illustrée dans un exemple d'écran diffusant pour projection d'images. La figure 4 schématise l'ensemble des cellules $C_1$ et $C_2$. La cellule $C_1$ est alimentée par une tension $V_1$ permettant de maintenir l'état diffusant lors du fonctionnement de l'écran dans le cas d'un polymère à nématique dispersé ne présentant pas d'effet mémoire. La cellule $C_2$ est alimentée par une tension $V_2$ permettant dans le cas d'une cellule électrochrome de basculer d'un état 21 transparent à un état 22 absorbant, une telle cellule présente de plus l'intérêt d'être à mémoire, il n'est donc pas nécessaire de maintenir la tension $V_2$ lors du fonctionnement de l'écran ; lorsque l'on souhaite revenir à l'état transparent 21 il suffit alors d'appliquer une tension -$V_2$ pour obtenir l'échange d'ions inverse entraînant la décoloration de la cellule $C_2$.

Typiquement pour réaliser un écran de surface 1m² on peut utiliser :

- une cellule $C_1$ comprenant une couche de matériau PDLC de 20 microns d'épaisseur, la taille des microbilles de cristal liquide étant de l'ordre de 2 à 3 microns les caractéristiques diélectriques des matériaux PDLC sont classiquement :

    . résistivité : $10^8$ohm-m
    . capacité équivalente C = 2,2 micro F

ce qui implique une tension de commutation dans l'état diffusant de 40 V à 2 kHz, un temps de commutation d'environ 10 ms, l'efficacité d'un matériau PDLC en rétrodiffusion Rd étant supérieure à 20 %
- une cellule $C_2$ comprenant au moins une couche de matériau électrochrome, une couche d'électrolyte. Typiquement les tensions de commande sont de l'ordre de quelques dizaines de volts selon les matériaux employés. Les temps de commutation varient d'une à quelques dizaines de secondes selon les tensions de commande.

Pour l'oxyde de tungstène le facteur de transmission Tec à l'état bloquant est de l'ordre de 0,1 et le facteur de réflexion Rec moyenné sur tout le spectre visible à l'état bloquant est supérieur à 0,25.

On peut ainsi évaluer en première approximation la réflectivité Re de l'écran et sa transparence T.

$$R_e = R_d + (1-Rd)(1-Rd) Rec = 0,36$$

$$T = (1-Rec) Tec (1-Rd) = 0,06$$

Lorsque cet écran est juxtaposé sur une surface S de type fenêtre, on peut évaluer le taux de lumière parasite apportée par l'écran dans l'ambiance lumineuse. Typiquement, dans une salle ensoleillée l'éclairage ambiant Ea peut être de l'ordre de 500 lux.

La luminance parasite transmise par l'écran est alors $L_t = T.E_a/\pi = 10$ nits

La luminance moyenne de l'environnement $L_{env}$ est définie par $L_{env} = R_{env} . Ea /\pi = 29$ nits en utilisant la valeur usuelle des photographes concernant la réflectivité de l'environnement Renv = 0,18.

La luminance parasite réfléchie par l'environnement $L_r$ est définie par $L_r = Re. L_{env} = 10$ nits, ce qui entraîne une luminance parasite totale de l'écran Lp = $L_r+L_t = 20$ nits.

Cette luminance parasite totale de l'écran reste inférieure à la luminance moyenne de l'environnement dans le cas défavorable d'une ambiance lumineuse élevée.

## Revendications

1. Ecran diffusant comprenant une première cellule ($C_1$) à base de cristal liquide superposée à une deuxième cellule ($C_2$) à base de matériau électrochrome ($E_c$) disposée sur la surface d'un support, caractérisé en ce que :

    - la première cellule ($C_1$) comprend un film de polymère d'indice optique $n_p$ dans lequel sont dispersées des microbilles allongées parallèlement au plan du film, ces microbilles contenant des molécules cristal liquide oblongues et biréfringentes d'indice extraordinaire $n_e$ tel que $n_e$ est égal à $n_p$, de manière à assurer un état au repos transparent (11) et un état excité diffusant (12).

2. Ecran diffusant selon la revendication 1, caractérisé en ce que ledit support est une fenêtre.

3. Ecran diffusant selon la revendication 1, caractérisé en ce que ledit support est un mur.

4. Système de projection d'image comprenant un dispositif de projection d'image et un écran selon l'une des revendications 1 à 3, ledit écran fonctionnant en mode réflexion.

5. Ecran diffusant selon l'une des revendications 1 à 3, caractérisé en ce que la première cellule ($C_1$) comprend des électrodes transparentes ($F_1$) permettant d'appliquer une tension sur ladite cellule

(C$_1$) de manière à faire basculer ladite cellule (C$_1$) d'un état transparent (11) à un état diffusant (12).

6. Ecran diffusant selon l'une des revendications 1 à 3 et 5, caractérisé en ce que la deuxième cellule (C$_2$) comprend des électrodes transparentes (F$_2$) permettant d'appliquer une tension sur ladite cellule (C$_2$) de manière à faire basculer ladite cellule (C$_2$) d'un état transparent à un état absorbant et réfléchissant.

**Patentansprüche**

1. Bildschirm mit Diffusionswirkung, der eine erste Zelle (C$_1$) auf der Basis von Flüssigkristallen und darunterliegend eine zweite Zelle (C$_2$) auf der Basis eines elektrochromen Materials (E$_c$) besitzt, die auf der Oberfläche eines Trägers liegt, dadurch gekennzeichnet, daß die erste Zelle (C$_1$) eine Polymerschicht mit einem Brechungsindex n$_p$ enthält, in die parallel zur Ebene der Schicht länglich geformte Mikrobläschen dispergiert sind, die längliche und doppelbrechende Flüssigkristallmoleküle enthalten, wobei der unnormale Brechungsindex n$_e$ so gewählt ist, daß er dem Brechungsindex n$_p$ gleicht, so daß ein lichtdurchlässiger Ruhezustand (11) und ein diffundierender angeregter Zustand (12) bewirkt werden.

2. Bildschirm mit Diffusionswirkung nach Anspruch 1, dadurch gekennzeichnet, daß der Träger ein Fenster ist.

3. Bildschirm mit Diffusionswirkung nach Anspruch 1, dadurch gekennzeichnet, daß der Träger eine Wand ist.

4. Bildprojektionssystem mit einer Vorrichtung zur Projektion von Bildern und einem Bildschirm nach einem der Ansprüche 1 bis 3, wobei der Bildschirm im Reflexionsmodus betrieben wird.

5. Bildschirm mit Diffusionswirkung nach einem der Ansprüche 1 bis 3, dadurch gekennzeichnet, daß die erste Zelle (C$_1$) transparente Elektroden (F$_1$) enthält, über die eine Spannung an die Zelle (C$_1$) angelegt werden kann, mit der die Zelle (C$_1$) von einem lichtdurchlässigen Zustand (11) in einen diffundierenden Zustand (12) umgeschaltet werden kann.

6. Bildschirm mit Diffusionswirkung nach einem der Ansprüche 1 bis 3 und 5, dadurch gekennzeichnet, daß die zweite Zelle (C$_2$) lichtdurchlässige Elektroden (F$_2$) besitzt, mit denen eine Spannung an die Zelle (C$_2$) angelegt werden kann, welche die Zelle (C$_2$) von einem lichtdurchlässigen Zustand in einen absorbierenden und reflektierenden Zustand umschaltet.

**Claims**

1. Diffusing display screen comprising a first cell (C$_1$) based on liquid crystal, superimposed with a second cell (C$_2$) based on electrochromic material (E$_c$) which is arranged on the surface of a support, characterised in that:

 - the first cell (C$_1$) comprises a polymer film of optical index n$_p$, in which are dispersed microballs laid out parallel to the plane of the film, these microballs containing oblong and birefringent liquid crystal molecules of extraordinary index n$_e$ such that ne is equal to n$_p$, so as to ensure a transparent rest state (11) and a diffusing excited state (12).

2. Diffusing display screen according to Claim 1, characterised in that the said support is a window.

3. Diffusing display screen according to Claim 1, characterised in that the said support is a wall.

4. Image-projection system comprising an image-projection device and a display screen according to one of Claims 1 to 3, the said display screen operating in reflection mode.

5. Diffusing display screen according to one of Claims 1 to 3, characterised in that the first cell (C$_1$) comprises transparent electrodes (F$_1$) allowing a voltage to be applied to the said cell (C$_1$) so as to switch the said cell (C$_1$) from a transparent state (11) to a diffusing state (12).

6. Diffusing display screen according to one of Claims 1 to 3 and 5, characterised in that the second cell (C$_2$) comprises transparent electrodes (F$_2$) allowing a voltage to be applied to the said cell (C$_2$) so as to switch the said cell (C$_2$) from a transparent state to an absorbing and reflecting state.

**FIG.1**

**FIG.2a**

**FIG.2b**

FIG.3

FIG.4